# EUROPEAN PATENT SPECIFICATION

(11) **EP 1 602 960 B1**
(45) Date of publication and mention of the grant of the patent: **24.10.2018**
(21) Application number: 05011694.6
(22) Date of filing: 31.05.2005
(51) Int. Cl.: G02B 21/06, G01N 21/64

(54) **Microscope**
Mikroskop
Microscope

(30) Priority: 02.06.2004 JP 2004164631
(43) Date of publication of application: 07.12.2005
(73) Proprietor: Olympus Corporation, Tokyo 192-8507 (JP)
(72) Inventor: Tsuchiya, Atsuhiro, Hachioji-shi, Tokyo 192-8507 (JP); Hasegawa, Kazuhiro, Hachioji-shi, Tokyo 192-8507, (JP)
(74) Representative: von Hellfeld, Axel

(56) References cited:
- US-A- 4 852 985
- US-A- 6 008 892
- US-A- 6 154 282
- US-A1- 2003 230 728

## Description

The present invention relates to a microscope.

In the biological field, experiments are widely conducted in a state similar to an in vivo state by using cultured cells. In an experiment, fluorescent observation of a specific region is performed with a fluorescence microscope by using the fluorescent protein that is made to appear by a fluorescent dye using an antigen-antibody reaction or gene introduction. For example, in a ratio imaging method used for the measurement of an ion concentration in a cell, it is required to realize high-speed excitation wavelength switching.

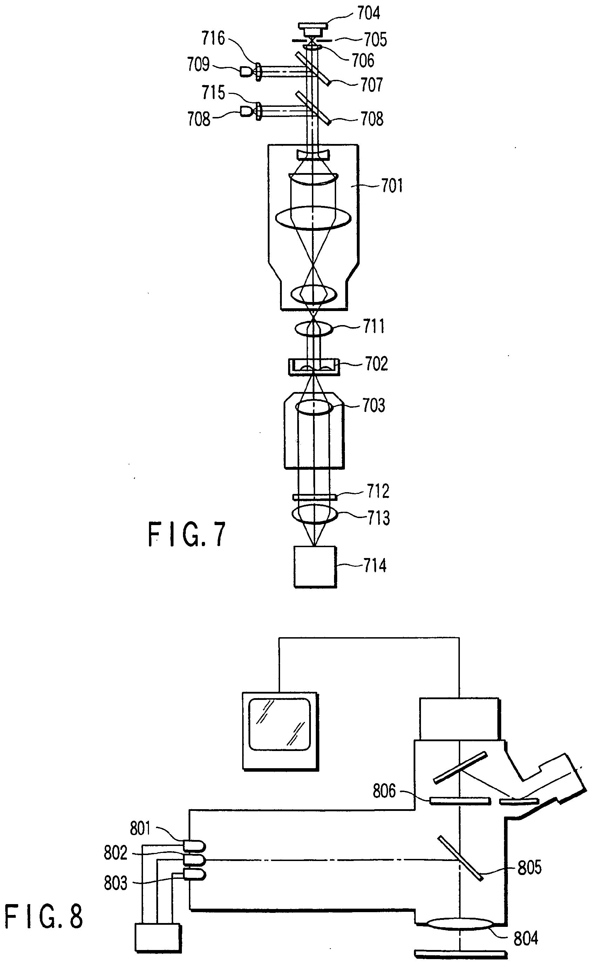

Jpn. Pat. Appln. KOKAI Publication No. 2002-131648 discloses an observation apparatus capable of excitation wavelength switching. FIG. 8 shows the basic arrangement of an observation apparatus disclosed in Jpn. Pat. Appln. KOKAI Publication No. 2002-131648. As shown in FIG. 8, this observation apparatus is provided with light-emitting diodes 801, 802, and 803, which emit light with different wavelengths and are arranged in a plane conjugate to the image-side focal plane of an objective lens 804, and can perform high-speed excitation wavelength switching by using a dichroic mirror 805 having reflection/transmission characteristics corresponding to the excitation fluorescence wavelength of a fluorescent dye and a wavelength selection filter 806 because the apparatus use no mechanical switching portion. However, the high-intensity light-emitting diodes 801, 802, and 803 each have an outer dimension of several mm, and hence it is difficult to place all the light-emitting diodes 801, 802, and 803 near the optical axis. This causes brightness unevenness in the observation visual field range.

Jpn. Pat. Appln. KOKAI Publication No. 2003-195177 discloses another observation apparatus capable of excitation wavelength switching. This observation apparatus comprises a switching device that rotates/drives light-emitting diodes that emit light with different wavelengths, and realizes illumination with little illumination unevenness due to different wavelengths by selectively placing one of the light-emitting diodes on the optical axis using the switching device. This observation apparatus, however, switches the light-emitting diodes by using a mechanical structure, and hence it is difficult to switch excitation wavelengths at high speed.

In addition, in the ratio imaging method, it is required to realize measurement effectively using the dynamic range of an image sensing device to be used. Assume that one of two light beams with different wavelengths subjected to photometry is bright, and the other is dark. In this case, if the sensitivity of the image sensing device is matched to light with the bright wavelength, a sufficient resolution cannot be obtained with respect to light with the dark wavelength. This makes it impossible to perform high-accuracy measurement.

Document US 6,154,282 refers to an apparatus for exciting a fluorescent or phosphorescent molecule applied to a specimen in a microscope. The microscope comprises a semiconductor light source capable of emitting an output light within a preselected wavelength band, an electronic controller coupled to the light source for controlling the intensity of the output light, and an optical system for converting the output light into an excitation beam having a pre-selected distribution of light flux suitable for illuminating the specimen.

Document US 2003/0230728 A1 refers to a method for viewing a pattern of biological material. In a first step, a sample is stained with dye and placed on a platform such that light emitted from a transillumination device is incident upon the sample. Then, the wavelength of light required for illumination the sample is determined and an emission filter is positioned between the sample and the transillumination device. Next, light is produced via light sources having the required wavelength. A determination is made as to whether the intensity of the light output from the light source is appropriate. If the intensity of the light is not appropriate, the intensity of the light output may be varied.

The present invention has been made in consideration of such a situation, and has as its object to provide a microscope which can switch the wavelengths of light to be applied to a specimen at high speed, realize illumination with little brightness unevenness, and acquire an image by effectively using the dynamic range of an image sensing device.

According to an aspect, the present invention is directed to a microscope. A microscope according to the present invention comprises an objective lens for observation of a specimen, light-emitting diodes with different emission wavelengths, a wavelength multiplexing device that multiplexes light emitted from the light-emitting diodes, and an illumination optical system that forms the multiplexed light into an image on a rear focal plane of the objective lens. All the light-emitting diodes are in a positional relationship conjugate to a rear focus of the objective lens through the wavelength multiplexing device and the illumination optical system. The microscope further comprises a photometric device that measures light from the specimen, an image sensing device that senses an image of the specimen through the objective lens, and a power supply device that controls brightness of light emitted from the light-emitting diode on the basis of a photometric value obtained by the photometric device.

According to another aspect, the present invention is directed to an image acquisition method of acquiring an image of light from a specimen by switching and applying light with different wavelengths to the specimen. An image acquisition method according to the present invention comprises acquiring brightness values of light from the specimen while switching light with different wavelengths to be applied to the specimen in synchronism with image capturing by an image sensing device, computing a ratio between the acquired brightness values of light, and controlling driving currents for light-emitting diodes, which emit light with different wavelengths, on the basis of a ratio as a computation result so that the brightness values become equal to each other.

There is
provided a microscope that can switch the wavelengths of light to be applied to a specimen at high speed, realize illumination with little brightness unevenness, and acquire an image by effectively using the dynamic range of an image sensing device. This makes it possible to perform high-accuracy image sensing operation.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing a fluorescence microscope according to the first embodiment of the present invention;
FIG. 2 is a view showing a light source device according to the second embodiment of the present invention;
FIG. 3 is a view showing a light source device according to the third embodiment of the present invention;
FIG. 4 is a view showing a light source device according to the fourth embodiment of the present invention;
FIG. 5 is a view showing a light source device according to the fifth embodiment of the present invention;
FIG. 6 is a view schematically showing a fluorescence microscope according to the sixth embodiment of the present invention;
FIG. 7 is a view schematically showing a fluorescence microscope according to the seventh embodiment of the present invention; and
FIG. 8 is a view showing the basic arrangement of the observation apparatus disclosed in Jpn. Pat. Appln. KOKAI Publication No. 2002-131648.

The embodiments of the present invention will be described below with reference to the views of the accompanying drawing.

### [First Embodiment]

### (Arrangement)

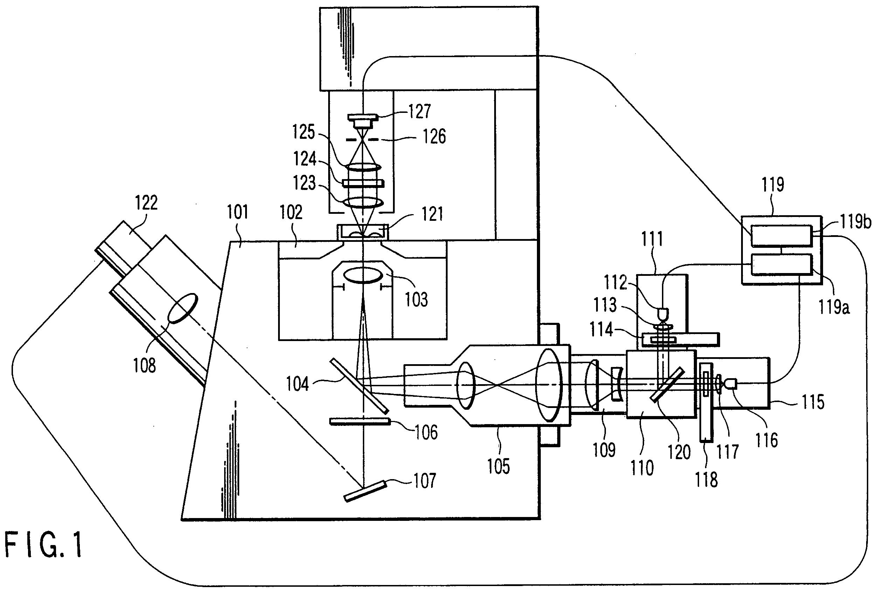

The first embodiment is directed to an inverted fluorescence microscope, which is often used for living cells. FIG. 1 shows a fluorescence microscope according to the first embodiment of the present invention.

As shown in FIG. 1, an inverted fluorescence microscope 101 comprises a specimen base 102 on which a specimen 121 is placed, an objective lens 103 for the observation of the specimen 121, a dichroic mirror 104, a light projecting unit 105 serving as an illumination optical system, an absorption filter 106, a reflecting mirror 107, an observation optical system 108, and a CCD camera 122 serving as an image sensing device that senses a fluorescence image. The light projecting unit 105 is provided with a light source device. The light source device comprises a rear converter 109, wavelength multiplexing device 110, first light source unit 111, and second light source unit 115. The rear converter 109 is mounted on the light projecting unit 105. The wavelength multiplexing device 110 is mounted on the rear converter 109. The first light source unit 111 and second light source unit 115 are mounted on the wavelength multiplexing device 110. Both the first light source unit 111 and second light source unit 115 are connected to a power supply device 119 for starting.

The first light source unit 111 comprises a first light-emitting diode 112 that emits blue light, a first collimator lens 113, and a first excitation filter 114. The second light source unit 115 comprises a second light-emitting diode 116 that emits red light, a second collimator lens 117, and a second excitation filter 118. The first light source unit 111 is provided with a slot in which the first excitation filter 114 can be inserted or from which it can be removed. Likewise, the second light source unit 115 is provided with a slot in which the second excitation filter 118 can be inserted or from which it can be removed. The first light-emitting diode 112 is fixed at the focal position of the first collimator lens 113. Likewise, the second light-emitting diode 116 is fixed at the focal position of the second collimator lens 117. The first light-emitting diode 112 and the second light-emitting diode 116 are in a positional relationship conjugate to the rear focus of the objective lens 103 through the light projecting unit 105, rear converter 109, and wavelength multiplexing device 110.

The wavelength multiplexing device 110 has a dichroic mirror 120 having the property of reflecting blue light and transmitting red light.

A photometric device is placed on the opposite side of the objective lens 103 to the specimen 121. The photometric device comprises a collimator lens 123, a multiband absorption filter 124 serving as a fluorescence selection element for selecting light emitted from the specimen 121, an imaging lens 125, a pinhole 126, and a photodiode 127 serving as a photometric element for measuring a quantity of light. The position of the pinhole 126 is in a positional relationship conjugate to the specimen 121. That is, the pinhole 126 is located on the optical axis and on a plane conjugate to the specimen plane.

The power supply device 119 has a driving unit 119a and control unit 119b. The first light-emitting diode 112 and second light-emitting diode 116 are connected to the driving unit 119a. The photodiode 127 is connected to the control unit 119b. The CCD camera 122 is also connected to the control unit 119b. The power supply device 119 controls driving currents to be supplied to the first light-emitting diode 112 and second light-emitting diode 116 on the basis of the photometric value obtained by the photodiode 127.

### (Function)

The divergent light beams emitted from the first light-emitting diode 112 and second light-emitting diode 116 are converted into parallel light beams by the first collimator lens 113 and second collimator lens 117, respectively, and strike the first excitation filter 114 and second excitation filter 118. Since the light beams from the first light-emitting diode 112 and second light-emitting diode 116, respectively, strike the first excitation filter 114 and second excitation filter 118 almost perpendicularly, no characteristic change occurs due to the incident angles of the light on the first excitation filter 114 and second excitation filter 118. This makes it possible to realize proper wavelength selection. In general, the wavelength width of a light-emitting diode is 20 nm to 50 nm in half-width, and the transmission wavelength width of an excitation filter is about 20 nm. Therefore, the light beams emitted from the first light-emitting diode 112 and second light-emitting diode 116 are reduced to a wavelength width of 20 nm by the first excitation filter 114 and second excitation filter 118, respectively. If high brightness is required, the first excitation filter 114 and second excitation filter 118 may be removed.

Both the light beams transmitted through the first excitation filter 114 and second excitation filter 118 strike the dichroic mirror 120 of the wavelength multiplexing device 110. Since the dichroic mirror 120 reflects blue light and transmits red light, the light from the first light-emitting diode 112 is reflected by the dichroic mirror 120, and the light from the second light-emitting diode 116 is transmitted through the dichroic mirror 120. As a consequence, the light beams with two wavelengths are multiplexed by the dichroic mirror 120.

The multiplexed light is diverged to a light beam diameter necessary for the illumination of an observation range by the rear converter 109 and enters the light projecting unit 105. The light that has entered the light projecting unit 105 is converged by a lens inside the light projecting unit 105. This light is reflected by the dichroic mirror 104, is formed into an image on the rear focal plane of the objective lens 103, and illuminates the specimen 121 without any brightness unevenness. Part of fluorescence emitted from the specimen 121 is captured by the objective lens 103. The fluorescence is longer in wavelength than excitation light, and hence is transmitted through the dichroic mirror 104. The direction of the light is then changed by the reflecting mirror 107, and the light forms an image on the CCD camera 122 through the observation optical system 108.

Part of the fluorescence emitted from the specimen 121 and part of the excitation light are converted into parallel light by the collimator lens 123. The parallel light then strikes the absorption filter 124. Only the fluorescence emitted from the specimen 121 is transmitted through the absorption filter 124, and focused on the pinhole placed on the optical axis by the imaging lens 125. The size of the pinhole 126 is about 1% of that of the imaging plane, and the pinhole is placed in a positional relationship optically conjugate to the specimen 121. The fluorescence transmitted through the pinhole 126 strikes the photodiode 127.

In general, observation regions, i.e., fluorescent regions, are dispersed on the specimen 121. For this reason, if the exposure of the image sensing device is determined on the basis of an overall light amount, often overexposure occurs and proper exposure cannot be achieved. If, however, a fluorescence intensity in only a narrow area in the center of an observation visual field in which an observation region is located is measured through the pinhole 126, accurate brightness photometry in the target fluorescent region can be performed without being influenced by the background. That is, proper photometry can be done even for a specimen on which fluorescent regions are dispersed without being influenced by the density of the specimen. The photodiode 127 is a photovoltaic element that generates a current that changes in accordance with the intensity of incident light, such that a current that corresponds to the fluorescence brightness of the specimen that is obtained by the excitation light emitted from the first light-emitting diode 112 and second light-emitting diode 116 is generated.

In an image sensing sequence, first of all, the target observation region, i.e., the fluorescent region, of the specimen 121 is moved to the center of the visual field, and then image sensing is started. First, the first light-emitting diode 112 is turned on by a current from the driving unit 119a of the power supply device 119. The fluorescence brightness of the specimen 121 with respect to the first light-emitting diode 112 is measured by the photodiode 127. The photometric value is transferred to the control unit 119b of the power supply device 119. The first light-emitting diode 112 generates an external trigger signal in synchronism with programmed time-division driving operation. The control unit 119b of the power supply device 119 issues an instruction to switch to the starting of the second light-emitting diode to the driving unit 119a on the basis of the external trigger signal, so that excitation wavelengths are switched.

The fluorescence brightness of the specimen 121 with respect to the second light-emitting diode 116 is measured by the photometric device. The control unit 119b compares the fluorescence brightness values with respect to the first light-emitting diode 112 and second light-emitting diode 116, and computes the ratio between the fluorescence brightness values with respect to the first light-emitting diode 112 and second light-emitting diode 116. Based on the computation result, a light-emitting diode exhibiting a lower fluorescence brightness is determined, and the ratio as the computation result is added up to a driving current value for the light-emitting diode exhibiting the lower fluorescence brightness so that the fluorescence brightness values with respect to the two diodes become equal to each other. With this operation, in the subsequent measurement, the fluorescence brightness values with respect to the first light-emitting diode 112 and second light-emitting diode 116 become equal to each other, and the CCD camera 122 senses a fluorescence image while widely using the dynamic range. An experiment, e.g., administering a reagent to a cell, is then started, and the sensed data obtained by the CCD camera 122 is processed by a computer and used as experimental data.

In the embodiment described above, the brightness of light emitted from the light-emitting diodes is controlled in accordance with the driving current. However, the light-emitting diodes may be constructed to emit pulsed light in a fixed cycle and the brightness of light emitted from the light-emitting diodes may be controlled in accordance with the pulse width (the period in which the light-emitting diode emits light). Further, in this embodiment, the photometric device for the specialized use measures the amount of florescent light. However, the image sensing CCD may be constructed to measure the amount of fluorescent light. In this case, a pin hole is positioned on a primary image plane, and a primary image is relayed and projected on the CCD.

### (Effects)

Since both the first light-emitting diode 112 and the second light-emitting diode 116 are arranged on the optical axis on a plane conjugate to the rear focal plane of the objective lens 103, illumination without any brightness unevenness can be realized. Since excitation wavelengths are switched electrically, instead of mechanically, by using the first light-emitting diode 112 and second light-emitting diode 116, high-speed excitation wavelength switching can be realized owing to the fast-response characteristics of the first light-emitting diode 112 and second light-emitting diode 116. In addition, matching fluorescence brightness values for each excitation wavelength by adjusting driving currents for the first light-emitting diode 112 and second light-emitting diode 116 on the basis of the photometric result on fluorescence intensity that is obtained by the photometric device makes it possible to perform measurement by effectively using the dynamic range of the CCD camera 122.

In addition, since the photometric device is placed on the opposite side of the objective lens 103 to the specimen 121, the fluorescence captured by the objective lens 103 can be measured without any loss. This allows high-brightness measurement. Furthermore, light beams from the first light-emitting diode 112 and second light-emitting diode 116 are converted into parallel light beams by the first collimator lens 113 and second collimator lens 117, respectively, and multiplexed by the dichroic mirror 120. The resultant light is diverted to a necessary light beam diameter by the rear converter 109. This makes it possible to reduce the sizes of the first collimator lens 113 and second collimator lens 117, thereby reducing the overall size.

### [Second Embodiment]

### (Arrangement)

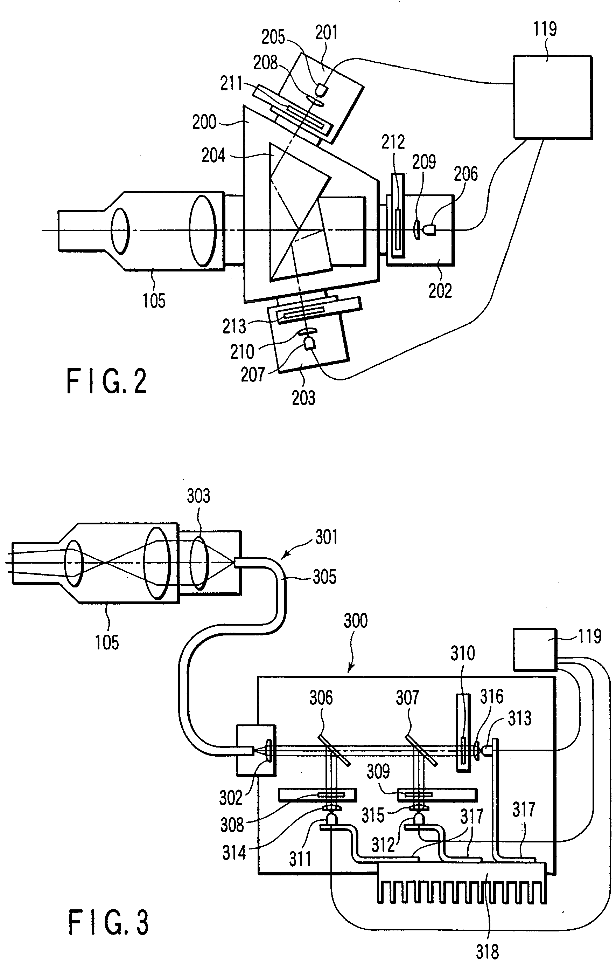

The second embodiment is directed to another light source device to which the present invention can be applied, instead of the light source device of the first embodiment. FIG. 2 shows a light source device according to the second embodiment of the present invention.

As shown in FIG. 2, the light source device according to this embodiment comprises a wavelength multiplexing device 200, first light source unit 201, second light source unit 202, and third light source unit 203. The wavelength multiplexing device 200 is mounted on a light projecting unit 105. The first light source unit 201, second light source unit 202, and third light source unit 203 are mounted on the wavelength multiplexing device 200.

The first light source unit 201 comprises a first light-emitting diode 205, first collimator lens 208, and first excitation filter 211. The second light source unit 202 comprises a second light-emitting diode 206, second collimator lens 209, and second excitation filter 212. The third light source unit 203 comprises a third light-emitting diode 207, third collimator lens 210, and third excitation filter 213. The first light-emitting diode 205 emits blue light. The second light-emitting diode 206 emits green light. The third light-emitting diode 207 emits red light. The light-emitting diodes 205, 206, and 207 are fixed at the focal positions of the collimator lenses 208, 209, and 210, respectively. All the light-emitting diodes 205, 206, and 207 are connected to a power supply device 119 for lighting.

The wavelength multiplexing device 200 has a color separation prism 204 that multiplexes blue light, green light, and red light. The color separation prism 204 comprises three prisms cemented to each other. First and second dichroic films are formed on the two cemented surfaces between the prisms. The first dichroic film reflects blue light and transmits light with wavelengths longer than that of blue light. The second dichroic film transmits green light and reflects light with wavelengths longer than that of green light.

### (Function)

The divergent light beams emitted from the light-emitting diodes 205, 206, and 207 are converted into parallel light beams by the collimator lenses 208, 209, and 210, respectively, and strike the color separation prism 204. The blue light is totally reflected by a constituent surface of the prism, is reflected by the first dichroic film, and exits from the color separation prism 204. The green light is transmitted through the second dichroic film and the first dichroic film and exits from the color separation prism 204. The red light is totally reflected by a constituent surface of the prism, reflected by the second dichroic film, and transmitted through the first dichroic film. This light then exits from the color separation prism 204. With this operation, the blue light, green light, and red light are multiplexed. The multiplexed light then enters the light projecting unit 105.

### (Effect)

This embodiment has the same merits as those of the first embodiment. In addition, the second embodiment can further reduce the size of the fluorescence microscope because the light source units can be arranged radially.

### [Third Embodiment]

### (Arrangement)

The third embodiment is directed to another light source device to which the present invention can be applied, instead of the light source device of the first embodiment. FIG. 3 shows a light source device according to the third embodiment of the present invention.

As shown in FIG. 3, the light source device according to this embodiment comprises a wavelength multiplexing device 300 and connection fiber 301. A light projecting unit 105 and the wavelength multiplexing device 300 are connected to each other through the connection fiber 301.

The connection fiber 301 comprises a fiber 305 and first and second fiber collimator lenses 302 and 303 provided on the two ends of the fiber 305. The two end faces of the fiber 305 are respectively fixed to the focal planes of the first fiber collimator lens 302 and second fiber collimator lens 303.

The wavelength multiplexing device 300 comprises a first dichroic mirror 306, a second dichroic mirror 307, a first excitation filter 308, a second excitation filter 309, a third excitation filter 310, a first collimator lens 314, a second collimator lens 315, a third light-emitting diode 316, a first light-emitting diode 311, a second light-emitting diode 312, a third light-emitting diode 313, a heat pipe 317 for dissipating heat generated by the first light-emitting diode 311, second light-emitting diode 312, and third light-emitting diode 313, and a heat sink 318 for dissipating heat generated by the heat pipe 317.

The first light-emitting diode 311, second light-emitting diode 312, and third light-emitting diode 313 are respectively fixed at the focal positions of the first collimator lens 314, second collimator lens 315, and third light-emitting diode 316. All the first light-emitting diode 311, second light-emitting diode 312, and third light-emitting diode 313 are connected to a power supply device 119 for starting. The first light-emitting diode 311 emits blue light. The second light-emitting diode 312 emits green light. The third light-emitting diode 313 emits red light. The first dichroic mirror 306 reflects blue light and transmits light with wavelengths longer than that of blue light. The second dichroic mirror 307 reflects green light and transmits light with wavelengths longer than that of green light.

### (Function)

The divergent light beams emitted from the first light-emitting diode 311, second light-emitting diode 312, and third light-emitting diode 313 are converted into parallel light beams by the first collimator lens 314, second collimator lens 315, and third light-emitting diode 316, respectively. The first excitation filter 308, second excitation filter 309, and third excitation filter 310 then select only light with necessary wavelengths.

The blue light from the first light-emitting diode 311 is reflected by the first dichroic mirror 306 and travels to the first fiber collimator lens 302. The green light from the second light-emitting diode 312 is reflected by the second dichroic mirror 307, is transmitted through the first dichroic mirror 306, and travels to the first fiber collimator lens 302. The red light from the third light-emitting diode 313 is transmitted through the second dichroic mirror 307 and first dichroic mirror 306, and travels to the first fiber collimator lens 302. With this operation, the light emitted from the first light-emitting diode 311, that emitted from the second light-emitting diode 312, and that emitted from the third light-emitting diode 313 are multiplexed by the first dichroic mirror 306 and second dichroic mirror 307.

The multiplexed light is focused on an end face of the fiber 305 by the first fiber collimator lens 302. The light that has traveled through the fiber 305 exits from an end face of the other fiber 305. This light is converted into parallel light by the second fiber collimator lens 303 and enters the light projecting unit 105.

The emission intensity of a light-emitting diode changes with changes in temperature. In order to stabilize the emission intensity, therefore, heat dissipation is performed. A heat pipe is designed to move heat by the evaporation and condensation of a working fluid, sealed in the pipe, which occur in a high-temperature portion and low-temperature portion.

### (Effects)

The third embodiment has the same merits as those of the first embodiment. In addition, in this embodiment, since the wavelength multiplexing device is not directly mounted on the light projecting unit but is mounted thereon through the fiber to supply light to the fluorescence microscope, a reduction in the size of the fluorescence microscope can be achieved. Using the heat pump can dissipate heat from even a light-emitting diode provided at a portion where it is difficult to ensure a space. In addition, since heat from the light-emitting diodes can be dissipated by the single heat sink, some members can be shared.

### [Fourth Embodiment]

### (Arrangement)

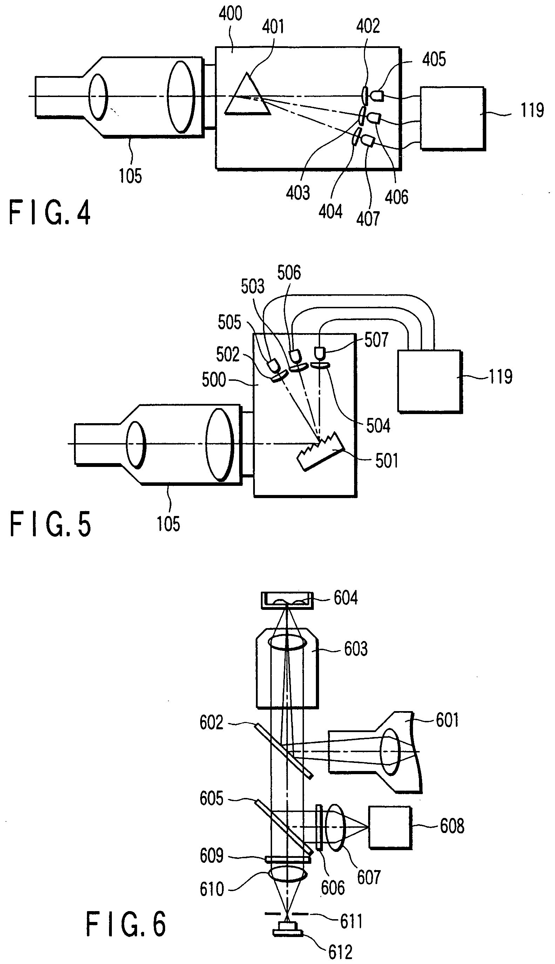

The fourth embodiment is directed to another light source device to which the present invention can be applied, instead of the light source device of the first embodiment. FIG. 4 shows a light source device according to the fourth embodiment of the present invention.

As shown in FIG. 4, the light source device of this embodiment comprises a wavelength multiplexing device 400, which is mounted on a light projecting unit 105. The wavelength multiplexing device 400 comprises a prism 401, first collimator lens 402, second collimator lens 403, third collimator lens 404, first light-emitting diode 405, second light-emitting diode 406, and third light-emitting diode 407. All the first light-emitting diode 405, second light-emitting diode 406, and third light-emitting diode 407 are connected to a power supply device 119. The first light-emitting diode 405, second light-emitting diode 406, and third light-emitting diode 407 emit light with different wavelengths, respectively. The first light-emitting diode 405, second light-emitting diode 406, and third light-emitting diode 407 are arranged in accordance with the spectral characteristics of the prism 401 so that all the light beams with different wavelengths that are emitted from them are refracted in the same direction by the prism 401.

### (Function)

The divergent light beams emitted from the first light-emitting diode 405, second light-emitting diode 406, and third light-emitting diode 407 are converted into parallel light by the first collimator lens 402, second collimator lens 403, and third collimator lens 404, respectively, and strike the prism 401. All the light beams with different wavelengths that have struck the prism 401 enter the light projecting unit 105 upon being superimposed on the same optical axis owing to the fraction effect of the prism 401.

### (Effects)

The fourth embodiment has the same merits as those of the first embodiment. In addition, in this embodiment, since wavelength multiplexing is performed by using the single prism 401, a reduction in the size of the wavelength multiplexing device 400 can be achieved. In addition, it is relatively easy to add another light-emitting diode.

### [Fifth Embodiment]

### (Arrangement)

The fifth embodiment is directed to another light source device to which the present invention can be applied, instead of the light source device of the first embodiment. FIG. 5 shows a light source device according to the fifth embodiment of the present invention.

As shown in FIG. 5, the light source device of this embodiment comprises a wavelength multiplexing device 500, which is mounted on a light projecting unit 105. The wavelength multiplexing device 500 comprises a grating 501, first collimator lens 502, second collimator lens 503, third collimator lens 504, first light-emitting diode 505, second light-emitting diode 506, and third light-emitting diode 507. All the first light-emitting diode 505, second light-emitting diode 506, and third light-emitting diode 507 are connected to a power supply device 119. The first light-emitting diode 505, second light-emitting diode 506, and third light-emitting diode 507 emit light with different wavelengths. The first light-emitting diode 505, second light-emitting diode 506, and third light-emitting diode 507 are arranged in accordance with spectral characteristics of the grating 501 so that light beams with different wavelengths emitted from them are diffracted in the same direction by the grating 501.

Letting α be the incident angle of a light ray on the grating 501, n be the number of grooves of the grating per unit length, k be the diffraction order, and β be the diffraction angle, then β = sin⁻¹(n·k·λ-sinα). That is, the diffraction angle depends on the wavelength. In consideration of the diffraction angle dependent on the wavelength, the first light-emitting diode 505, second light-emitting diode 506, and third light-emitting diode 507 are arranged so that diffracted light beams are superimposed on the same optical axis.

### (Function)

The scattered light beams emitted from the first light-emitting diode 505, second light-emitting diode 506, and third light-emitting diode 507 are converted into parallel light beams by the first collimator lens 502, second collimator lens 503, and third collimator lens 504, respectively, and strike the grating 501. The light beams with different wavelengths that have struck the grating 501 are diffracted at angles dependent on the wavelengths, respectively. As a result, the light beams from the first light-emitting diode 505, second light-emitting diode 506, and third light-emitting diode 507 are diffracted in the same direction, are superimposed on the same optical axis, and enter the light projecting unit 105.

### (Effect)

This embodiment has the same merits as those of the first embodiment.

### [Sixth Embodiment]

### (Arrangement)

The sixth embodiment is directed to an inverted fluorescence microscope having an arrangement different from that of the first embodiment. This embodiment greatly differs from the first embodiment in the layout of a photometric device. FIG. 6 schematically shows a fluorescence microscope according to the sixth embodiment of the present invention.

As shown in FIG. 6, the fluorescence microscope of this embodiment comprises a projection tub 601 serving as an illumination optical system, a dichroic mirror 602, an objective lens 603 for the observation of a specimen 604, a photometric dichroic mirror 605, a wavelength selection filter 606, an imaging lens 607, a CCD camera 608, an absorption filter 609 serving as a fluorescence selection element, an imaging lens 610, a pinhole 611, and a photodiode 612 serving as a photometric element. The photometric dichroic mirror 605, absorption filter 609 serving as a fluorescence selection element, imaging lens 610, pinhole 611, and photodiode 612 constitute a photometric device. The pinhole 611 is located on the optical axis and on a plane conjugate to a specimen plane. Although not shown, a light source device is mounted on the projection tub 601. The light source device may be one of the light source devices described in the first to fifth embodiments.

### (Function)

Light from the light-emitting diode that is converted into convergent light by the projection tub 601 is formed into an image on the rear focal plane of the objective lens 603 through the dichroic mirror 602, and illuminates the specimen 604. The fluorescence emitted from the specimen 604 is captured by the objective lens 603 and converted into parallel light. The fluorescence is transmitted through the dichroic mirror 602 and reaches the photometric dichroic mirror 605. The photometric dichroic mirror 605 has the property of transmitting about 10% of light in the long wavelength range of fluorescence. For this reason, most of the light is reflected by the photometric dichroic mirror 605, and several % of fluorescence is transmitted through the photometric dichroic mirror 605.

Of the light reflected by the photometric dichroic mirror 605, only fluorescence is selectively transmitted through the wavelength selection filter 606 and forms an image on the CCD camera 608 through the imaging lens 607.

The fluorescence transmitted through the photometric dichroic mirror 605 is focused on the pinhole 611 placed on the optical axis on a plane conjugate to the specimen plane. The fluorescence transmitted through the pinhole 611 strikes the photodiode 612.

As in the first embodiment, light-emitting diodes are switched in synchronism with an external trigger signal generated by the CCD camera 608, and the photometry result obtained by the photometric device is reflected in a driving current for the light-emitting diode by the control unit for the light source, thereby equalizing the brightness values of fluorescence emitted from the light-emitting diodes.

### (Effect)

This embodiment has the same merits as those of the first embodiment. In addition, in this embodiment, the photometric device is placed on the same side as the light source device and CCD camera 608. In other words, the photometric device is placed on the same side as the objective lens 603 with respect to the specimen 604. Therefore, nothing is placed on the opposite side of the objective lens 603 to the specimen 604. This makes it easy to arrange other devices.

### [Seventh Embodiment]

### (Arrangement)

The seventh embodiment is directed to an inverted fluorescence microscope having an arrangement different from that of the first embodiment. This embodiment greatly differs from the first embodiment in the layout of a light projecting unit. FIG. 7 schematically shows a fluorescence microscope according to the seventh embodiment of the present invention.

As shown in FIG. 7, the fluorescence microscope of this embodiment comprises a light projecting unit 701 serving as an illumination.optical system, an objective lens 703 for the observation of a specimen 702, a photodiode 704 serving as a photometric element, a pinhole 705, a photometric imaging lens 706, a first dichroic mirror 707, a second dichroic mirror 708, a first light-emitting diode 709, a second light-emitting diode 710, a first collimator lens 715, a second collimator lens 716, a condenser lens 711, a wavelength selection filter 712, an imaging lens 713, and a CCD camera 714. The light projecting unit 701 is placed on the opposite side of the objective lens 703 to the specimen 702. The first dichroic mirror 707 and second dichroic mirror 708 are long-path filters that transmit light with wavelengths longer than that of light emitted from the first light-emitting diode 709 and second light-emitting diode 710 by 50 nm or more. The photodiode 704, pinhole 705, and photometric imaging lens 706 constitute a photometric device. The pinhole 705 is located on the optical axis and on a plane conjugate to the specimen plane.

### (Function)

The light beams emitted from the first light-emitting diode 709 and second light-emitting diode 710 are converted into parallel light beams by the first collimator lens 715 and second collimator lens 716, respectively, and multiplexed by the first dichroic mirror 707 and second dichroic mirror 708. The multiplexed light is then focused on the rear focal plane of the condenser lens 711 to illuminate the specimen 702 with little brightness unevenness. Part of the fluorescence emitted from the specimen 702 is captured by the objective lens 703 and converted into parallel light. Of the parallel light, only fluorescence is selected by the wavelength selection filter 712 and forms an image on the CCD camera 714 by the imaging lens 713. The fluorescence emitted toward the condenser lens 711 reaches the dichroic mirrors 707 and 708 through the condenser lens 711 and light projecting unit 701. Only the long-wavelength components of the fluorescence emitted from the specimen 702 are transmitted through the dichroic mirrors 707 and 708 and focused on the pinhole 705 placed on the optical axis on a plane conjugate to the specimen plane. If the wavelength of fluorescence emitted from the first light-emitting diode 709 is not near that of fluorescence emitted from the second light-emitting diode 710, the first dichroic mirror 707 may be additionally provided with the property of transmitting also the fluorescence emitted from the second light-emitting diode 710.

### (Effect)

In this embodiment, the same merits as those of the first embodiment can be obtained by the transmitted illumination arrangement.

### [Supplementary Explanation]

The embodiments of the present invention have been described above with reference to the views of the accompanying drawing. However, the present invention is not limited to these embodiments, and may be variously changed or modified within the scope of the invention.

Each embodiment has exemplified the case wherein a light source comprises light-emitting diodes. However, any light source can be used as long as emission/extinction can be performed at high speed. For example, a light source may comprise a lamp and a shutter. Each embodiment has also exemplified the case wherein a fluorescence image is sensed. However, a target to be sensed is not limited to a fluorescence image, and another kind of image may be used as a target. Furthermore, each embodiment has exemplified the inverted microscope. However, the present invention may be applied to an erecting microscope.

## Claims

1. A microscope (101) **characterized by** comprising:
an objective lens (103; 603; 703) for observation of a specimen (121; 604; 702);
light-emitting diodes (112; 116; 205, 206, 207; 311, 312, 313; 405, 406, 407; 505, 506, 507; 708, 709) with different emission wavelengths;
a wavelength multiplexing device (110; 200; 300; 400; 500) configured to multiplex light emitted from the light-emitting diodes (112; 116; 205, 206, 207; 311, 312, 313; 405, 406, 407; 505, 506, 507; 708, 709);
an illumination optical system (105; 601; 701) configured to form the multiplexed light into an image on a rear focal plane of the objective lens (103; 603; 703), all the light-emitting diodes (112; 116; 205, 206, 207; 311, 312, 313; 405, 406, 407; 505, 506, 507; 708, 709) being in a positional relationship conjugate to a rear focus of the objective lens (103; 603; 703) through the wavelength multiplexing device (110; 200; 300; 400; 500) and the illumination optical system (105; 601; 701);
a photometric device configured to measure light from the specimen (121; 604; 702);
an image sensing device (122; 608; 714) configured to sense an image of the specimen (121; 604; 702) through the objective lens (103; 603; 703); and
a power supply device (119) configured to control brightness of light emitted from the light-emitting diode on the basis of a photometric value obtained by the photometric device.

2. A microscope (101) according to claim 1, **characterized in that** the photometric device includes a photometric (127; 612; 704) configured to measure a quantity of light, and a pinhole (126; 611; 705) located between the photometric element and the specimen (121; 604; 702) and placed on an optical axis and on a plane conjugate to a specimen (121; 604; 702) plane.

3. A microscope (101) according to claim 2, **characterized in that** the photometric device further includes a fluorescence selection element (124; 609) configured to selectively transmit only fluorescence emitted from the specimen (121; 604; 702).

4. A microscope (101) according to claim 1, **characterized in that** the power supply device (119) includes a driving unit (119a) capable of controlling brightness of light emitted from the light-emitting diodes (112; 116; 205, 206, 207; 311, 312, 313; 405, 406, 407; 505, 506, 507; 708, 709) and a control unit (119b) configured to switch starting of the light-emitting diodes (112; 116; 205, 206, 207; 311, 312, 313; 405, 406, 407; 505, 506, 507; 708, 709) in synchronism with image capturing by the image sensing device (122; 608; 714), acquire brightness values of light from the specimen (121; 604; 702) measured by the photometric device, compute a ratio between the acquired brightness values, and control the driving unit (119a) so as to equalize the brightness values.

5. A microscope (101) according to claim 1, **characterized in that** the microscope is an inverted microscope, the specimen (121; 604; 702) is illuminated through the objective lens (103; 603; 703), and the photometric device is configured to measure light which has passed through the specimen (121; 604; 702).

## Patentansprüche

1. Mikroskop (101), **dadurch gekennzeichnet, dass** es umfasst:
eine Objektivlinse (103; 603; 703) zur Beobachtung einer Probe (121; 604; 702);
Leuchtdioden (112; 116; 205; 206; 207; 311; 312; 313; 405; 406; 407; 505, 506, 507, 708, 709) mit verschiedenen Emissionswellenlängen;
eine Wellenlängen-Multiplexvorrichtung (110; 200; 300; 400; 500), die zum Multiplexen von Licht konfiguriert ist, das von den Leuchtdioden (112; 116; 205; 206; 207; 311; 312; 313; 405; 406; 407; 505, 506, 507, 708, 709) emittiert wird;
ein optisches Beleuchtungssystem (105; 601; 701), das zur Erzeugung eines Bildes auf einer hinteren Brennebene der Objektivlinse (103; 603; 703) durch das gemultiplexte Licht ausgelegt ist, wobei alle Leuchtdioden (112; 116; 205; 206; 207; 311; 312; 313; 405; 406; 407; 505, 506, 507, 708, 709) in einer Positionsbeziehung sind, die mit einem hinteren Brennpunkt der Objektivlinse (103; 603; 703) durch die Wellenlängen-Multiplexvorrichtung (110; 200; 300; 400; 500) und das optische Beleuchtungssystem (105; 601; 701) konjugiert ist;
ein fotometrisches Gerät, das zur Messung von Licht von der Probe (121; 604; 702) ausgelegt ist;
eine Bilderfassungsvorrichtung (122; 608; 714), die zur Erfassung eines Bildes der Probe (121; 604; 702) durch die Objektivlinse (103; 603; 703) konfiguriert ist; und
eine Stromversorgungseinrichtung (119), die zur Steuerung der Helligkeit des von der Leuchtdiode emittierten Lichts auf der Grundlage eines fotometrischen Werts, der vom fotometrischen Gerät bezogen wird, ausgelegt ist.

2. Mikroskop (101) nach Anspruch 1, **dadurch gekennzeichnet, dass** das fotometrische Gerät eine Fotometrik (127; 612; 704), die zur Messung einer Lichtmenge konfiguriert ist, sowie eine Lochblende (126; 611; 705) enthält, die sich zwischen dem fotometrischen Element und der Probe (121; 604; 702) befindet und auf einer optischen Achse und einer Ebene platziert ist, die mit einer Proben(121; 604; 702)-Ebene konjugiert ist.

3. Mikroskop (101) nach Anspruch 2, **dadurch gekennzeichnet, dass** das fotometrische Gerät weiterhin ein Fluoreszenzauswahl-Element (124; 609) enthält, das dazu ausgelegt ist, nur die von der Probe (121; 604; 702) emittierte Fluoreszenz selektiv zu übertragen.

4. Mikroskop (101) nach Anspruch 1, **dadurch gekennzeichnet, dass** die Stromversorgungseinrichtung (119) eine Antriebseinheit (119a) mit der Fähigkeit zur Steuerung der Helligkeit des von den Leuchtdioden (112; 116; 205; 206; 207; 311; 312; 313; 405; 406; 407; 505, 506, 507, 708, 709) emittierten Lichts sowie eine Steuereinheit (119b) enthält, die zum Schalterstart der Leuchtdioden (112; 116; 205; 206; 207; 311; 312; 313; 405; 406; 407; 505, 506, 507, 708, 709) im Gleichlauf mit der Bilderfassung durch die Bilderfassungsvorrichtung (122; 608; 709), zur Erfassung von Helligkeitswerten des Lichts von der Probe (121; 604; 702) gemäß Messung durch das fotometrische Gerät, zur Berechnung eines Verhältnisses zwischen den erfassten Helligkeitswerten und zur Steuerung der Antriebseinheit (119a) zum Ausgleich der Helligkeitswerte konfiguriert ist.

5. Mikroskop (101) nach Anspruch 1, **dadurch gekennzeichnet, dass** das Mikroskop ein inverses Mikroskop ist, die Probe (121; 604; 702) durch die Objektivlinse (103; 603; 703) beleuchtet wird und das fotometrische Gerät zur Messung von Licht ausgelegt ist, das durch die Probe (121; 604; 702) gelaufen ist.

## Revendications

1. Microscope (101) **caractérisé par le fait qu'**il comprend :
un objectif (103 ; 603 ; 703) pour l'observation d'un échantillon (121 ; 604 ; 702) ;
des diodes électroluminescentes (112 ; 116 ; 205, 206, 207 ; 311, 312, 313 ; 405, 406, 407 ; 505, 506, 507 ; 708, 709) avec différentes longueurs d'onde d'émission ;
un dispositif de multiplexage de longueur d'onde (110 ; 200 ; 300 ; 400 ; 500) configuré pour multiplexer de la lumière émise à partir des diodes électroluminescentes (112 ; 116 ; 205, 206, 207 ; 311, 312, 313 ; 405, 406, 407 ; 505, 506, 507 ; 708, 709) ;
un système optique d'éclairage (105 ; 601 ; 701) configuré pour former la lumière multiplexée en une image sur un plan focal arrière de l'objectif (103 ; 603 ; 703), toutes les diodes électroluminescentes (112 ; 116 ; 205, 206, 207 ; 311, 312, 313 ; 405, 406, 407 ; 505, 506, 507 ; 708, 709) étant dans une relation de position conjuguée à un foyer arrière de l'objectif (103 ; 603 ; 703) par l'intermédiaire du dispositif de multiplexage de longueur d'onde (110 ; 200 ; 300 ; 400 ; 500) et du système optique d'éclairage (105 ; 601 ; 701) ;
un dispositif photométrique configuré pour mesurer de la lumière provenant de l'échantillon (121 ; 604 ; 702) ;
un dispositif de détection d'image (122 ; 608 ; 714) configuré pour détecter une image de l'échantillon (121 ; 604 ; 702) par l'intermédiaire de l'objectif (103 ; 603 ; 703) ; et
un dispositif d'alimentation électrique (119) configuré pour commander la luminosité de la lumière émise à partir de la diode électroluminescente sur la base d'une valeur photométrique obtenue par le dispositif photométrique.

2. Microscope (101) selon la revendication 1, **caractérisé par le fait que** le dispositif photométrique comprend un élément photométrique (127 ; 612 ; 704) configuré pour mesurer une quantité de lumière, et un trou sténopéïque (126 ; 611 ; 705) situé entre l'élément photométrique et l'échantillon (121 ; 604 ; 702) et placé sur un axe optique et sur un plan conjugué à un plan d'échantillon (121 ; 604 ; 702).

3. Microscope (101) selon la revendication 2, **caractérisé par le fait que** le dispositif photométrique comprend en outre un élément de sélection de fluorescence (124 ; 609) configuré pour transmettre de manière sélective uniquement la fluorescence émise à partir de l'échantillon (121 ; 604 ; 702).

4. Microscope (101) selon la revendication 1, **caractérisé par le fait que** le dispositif d'alimentation électrique (119) comprend une unité d'attaque (119a) capable de commander la luminosité de la lumière émise à partir des diodes électroluminescentes (112 ; 116 ; 205, 206, 207 ; 311, 312, 313 ; 405, 406, 407 ; 505, 506, 507 ; 708, 709) et une unité de commande (119b) configurée pour commuter le démarrage des diodes électroluminescentes (112 ; 116 ; 205, 206, 207 ; 311, 312, 313 ; 405, 406, 407 ; 505, 506, 507 ; 708, 709) en synchronisme avec une capture d'image par le dispositif de détection d'image (122 ; 608 ; 714), acquérir des valeurs de luminosité de lumière provenant de l'échantillon (121 ; 604 ; 702) mesurées par le dispositif photométrique, calculer un rapport entre les valeurs de luminosité acquises, et commander l'unité d'attaque (119a) de façon à égaliser les valeurs de luminosité.

5. Microscope (101) selon la revendication 1, **caractérisé par le fait que** le microscope est un microscope inversé, l'échantillon (121 ; 604 ; 702) est éclairé par l'intermédiaire de l'objectif (103 ; 603 ; 703), et le dispositif photométrique est configuré pour mesurer une lumière qui est passée à travers l'échantillon (121 ; 604 ; 702).
